# EUROPEAN PATENT SPECIFICATION

(11) **EP 1 536 239 B1**
(45) Date of publication and mention of the grant of the patent: **01.03.2017**
(21) Application number: 04257298.2
(22) Date of filing: 24.11.2004
(51) Int. Cl.: G01P 3/487, G01D 5/245, G01D 5/244, F16C 41/00, F16C 33/78, F16C 33/66, F16C 19/18

(54) **Encoder structure**
Drehgeberstruktur
Structure de codeur de rotation

(30) Priority: 28.11.2003 JP 2003398986
(43) Date of publication of application: 01.06.2005
(73) Proprietor: Fuji Jukogyo Kabushiki Kaisha, Tokyo 150-8554 (JP)
(72) Inventor: Matsumoto, Yasuaki, c/o Fuji Jukogyo K.K., Tokyo (JP)
(74) Representative: Manley, Nicholas Michael

(56) References cited:
- EP-A2- 1 291 660
- US-A- 4 924 161

## Description

The present invention relates to an encoder structure that is positioned close to a sensor head unit installed in an irrotational part with a rotative magnetic ring unit whose circumference has north and south poles arranged alternately. The present invention is applied particularly to an encoder that is utilized as a sensor installed in a wheel speed detecting device of an automobile ABS (Anti Lock Brake System) and functions as a sealing device for a shaft bearing part.

There has been widely used a device for detecting a magnetic force alteration associated with relative rotation of an encoder and a sensor head unit, as a wheel speed detecting device of an automobile ABS. The encoder or a magnetic material is attached to a rotational part such as a drive shaft or a bearing and is positioned close to the sensor head unit installed in the irrotational part such as a wheel housing. A typical encoder is disclosed in JP-A-2003-35565 (see paragraphs 0015 and 0016).

EP 1 291 660 A2 discloses a magnetic pulser ring provided with a ring-shaped supporting member and a magnetized member formed into a strip shape and secured to a circumferential face of the supporting member so that N-poles and S-poles are arranged alternately with equal pitches. The length of the circumferential face of the supporting member is set so as to correspond to the length of the magnetized member so that the end portions of the magnetized member are butted to each other without any gap with the magnetic property in the butted portion being maintained to have equal pitches. The magnetized member is magnetized by a magnetizing device, and then affixed to the supporting member. A portion having a different pitch may be used as a reference position marker; also individual magnets may be attached to a support.

US 4 924 161 A discloses a position and speed detecting device which includes a detection-signal generator comprising a rotor magnet assembly having a plurality of magnetic poles and a coil pattern for signal detection which moves relatively facing magnetized bodies of the rotor magnet assembly, a speed-signal detector for taking out a signal for frequency detection from said coil pattern for frequency-signal detection to produce a signal for speed detection; and a position-signal detector for producing a signal for position detection from said coil pattern for position-signal detection. An interface of at least one pair of S and N magnetic poles slanted at an angle different from that of interfaces of other magnetic poles and a part of coil pattern in the coil pattern for signal detection is slanted at an angle substantially the same as that of the magnetic poles for position-signal detection and other part of coil pattern is formed at an angle substantially the same as that of the magnetic poles for frequency-signal detection to make it a coil pattern for frequency-signal detection.

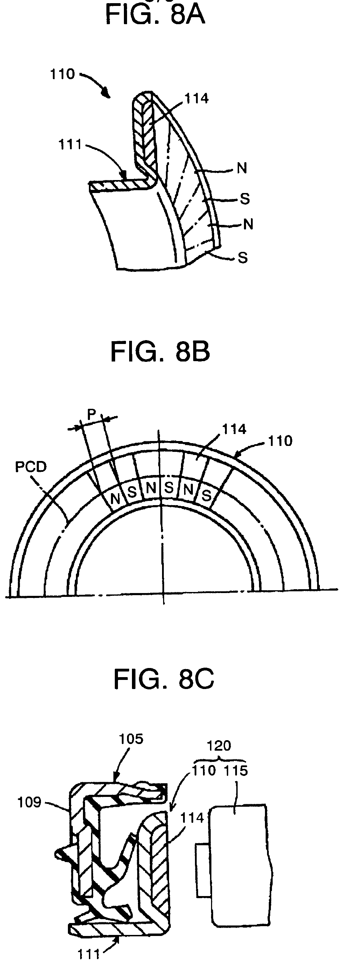

The encoder disclosed in JP-A-2003-35565 will be described with reference to Fig. 8. As shown in Figs. 8A and 8C, a magnetic encoder 110 is placed in a face-to-face position close to a magnetic sensor 115 installed in an irrotational
part, and is equipped with a ring-shaped component 111 made from metal and a magnetic component 114 placed along a circumferential direction on a surface of the ring-shaped component 111. Here, as shown in Fig. 8B, the magnetic component 114 is a film of synthetic resin coating laced with magnetic powder and forms magnetic N and S poles arranged alternately by becoming multipolarized in the circumferential direction. The magnetic encoder 110 and the magnetic sensor 115 together comprise a rotation detecting device 120 as shown in Fig. 8C. On the other hand, a sealing device 105 comprises the magnetic encoder 110 and a sealing component 109 of the irrotational part.

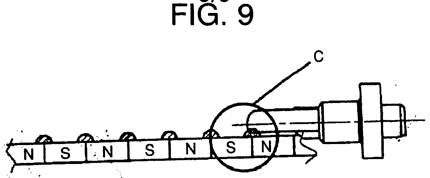

This encoder structure has provided a magnetic encoder, which is thin, highly abrasion-resistant and highly productive, as the rotation detecting device of a wheel shaft bearing. However, in such an encoder structure, it is inevitable that small iron particles adhere to a surface of the encoder as seen in a part C of Fig. 9 in a circumstance in which the encoder is used as a suspension unit, because the encoder is a magnetic material per se. Further, deposits of iron particles tend to accumulate after a prolonged use. The deposits grow especially along a magnetic flux between the N and S poles. Consequently, a minute clearance between the magnetic component (a magnetic ring unit) and the magnetic sensor (a sensor head unit) is filled with the deposits that may damage the magnetic component and the magnetic sensor.

For resolving the problems of existing encoder structures, the present invention has an object to provide an encoder structure that ensures durability and reliability of an encoder by eliminating deposits and reducing damage to the surface of the encoder and a sensor head unit.

In order to solve such problems, the present invention provides an encoder structure including a sensor head unit installed in an irrotational part, a rotative magnetic ring unit positioned close to the sensor head unit and having a north pole and a south pole arranged alternately on a circumference thereof, and a groove unit formed in at least one of spaces between the north pole and the south pole located on a surface of the magnetic ring unit, wherein the groove unit is formed so that the direction of the groove unit dividing the north pole and the south pole in a cross-sectional direction of the groove unit is tilted at a predetermined angle with respect to the direction perpendicular to the surface of the magnetic ring unit.

It is preferred in the present invention that a cross-sectional shape of the groove unit is selected from one of a V shape, a concave shape, a trapezoid and a horseshoe shape. Additionally, it is preferred in the present invention that a circumferentially extending groove is formed adjacently to a bottom of the groove unit to have a key-shaped groove unit. Additionally, it is preferred in the present invention that an arrangement of the north pole and the south pole on the circumference is tilted at a predetermined angle with respect to a radial line from a center of the magnetic ring unit.

By way of example only, specific embodiments of the present invention will now be described, with reference to the accompanying drawings, in which:
Figs. 1A, 1B and 1C are a lateral diagram showing a main part, an enlarged cross-sectional diagram showing a magnetic ring unit and a diagram showing the relation between a sensor head unit and the magnetic ring unit respectively, regarding a first encoder structure which does not form part of the present invention;
Figs. 2A and 2B are an overall cross-sectional diagram showing an axis arm to which the encoder structure is adopted and an enlarged diagram showing a part B of Fig. 2A respectively, regarding the encoder structure according to the present invention;
Fig. 3 is a perspective diagram showing a bearing to which the encoder structure is adopted, regarding the encoder structure according to the present invention;
Fig. 4 is an enlarged cross-sectional diagram that shows a magnetic ring unit regarding a second encoder structure which does not form part of the present invention;
Fig. 5 is an enlarged cross-sectional diagram that shows a magnetic ring unit regarding a third encoder structure which does not form part of the present invention;
Fig. 6 is a lateral diagram that shows a main part regarding a fourth encoder structure which does not form part of the the present invention;
Fig. 7 is an enlarged cross-sectional diagram that shows a magnetic ring unit regarding an embodiment of encoder structure according to the present invention;
Fig. 8 is an explanatory diagram showing a conventional magnetic encoder for an automobile; and
Fig. 9 is an explanatory diagram showing a problem regarding the conventional magnetic encoder.

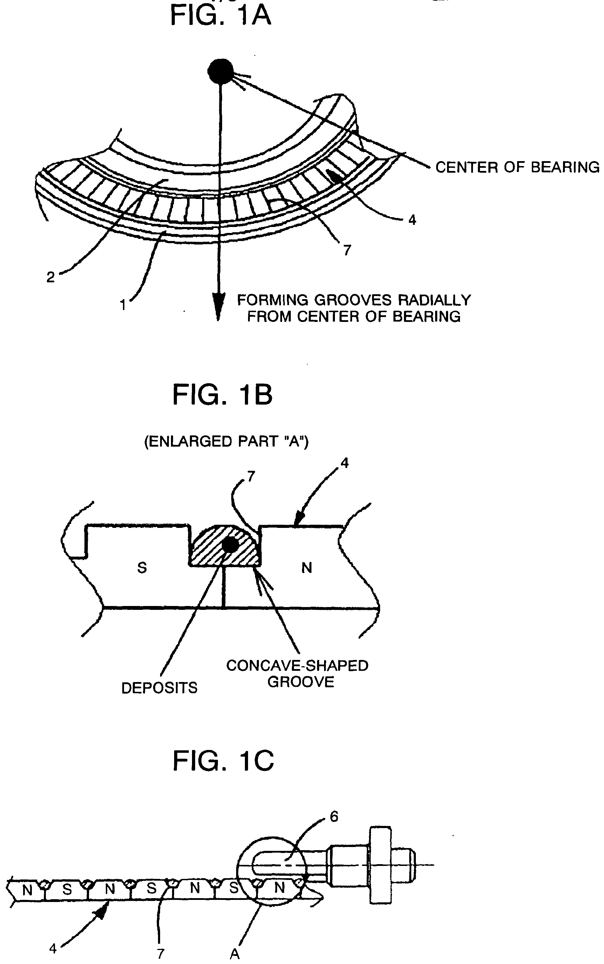

Hereinafter, a preferred embodiment of the present invention will be described with reference to the drawings. The arrangements of Figs. 1, 4, 5 and 6 do not form part of the present invention, but represent background art that is useful for understanding the present invention.

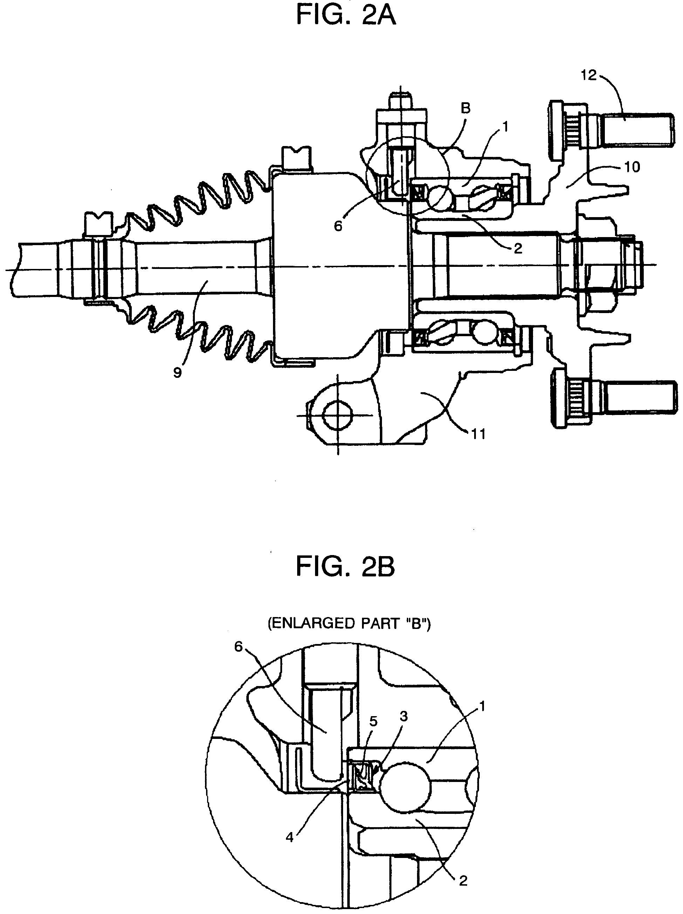

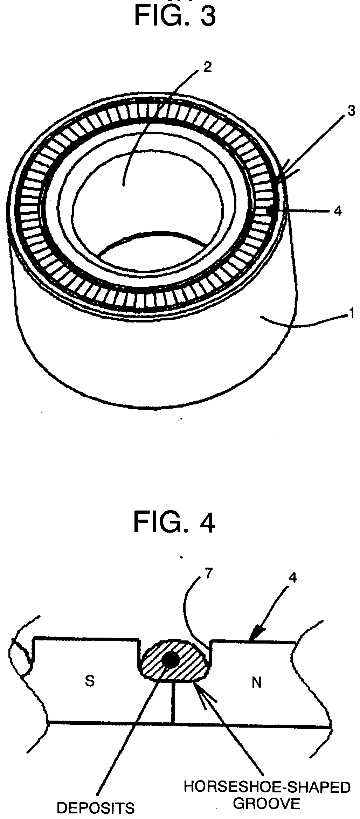

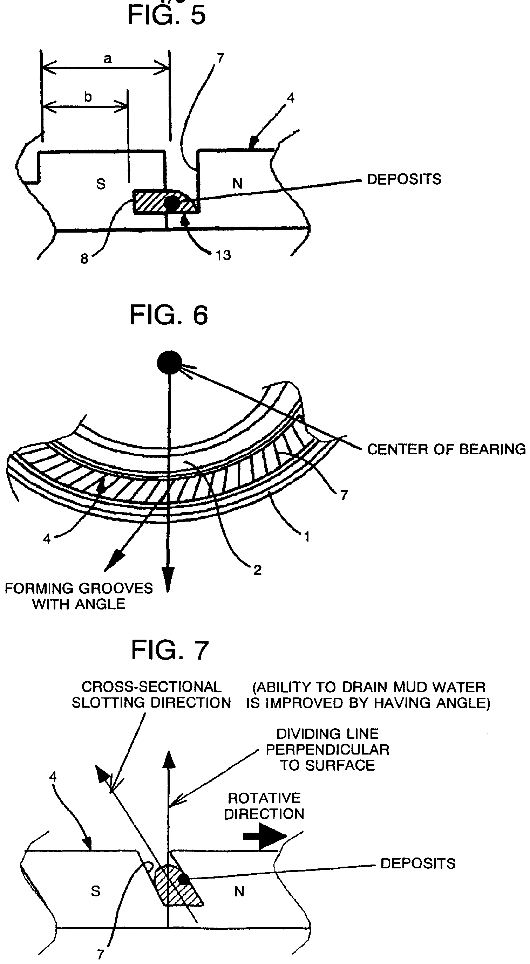

Figs. 1 to 3 show a first encoder structure which does not form part of the present invention. Figs. 1A, 1B and 1C are a lateral diagram showing a main part, an enlarged cross-sectional diagram showing a magnetic ring unit and a diagram showing the relation between a sensor head unit and the magnetic ring unit respectively. Figs. 2A and 2B are an overall cross-sectional diagram showing an axis arm to which the encoder structure according to the present invention is adopted and an enlarged diagram showing a part B of Fig. 2A respectively. Fig. 3 is a perspective diagram showing a bearing to which the encoder structure according to the present invention is adopted. Fig. 4 is an enlarged cross-sectional diagram that shows a magnetic ring unit regarding a second encoder structure which does not form part of the present invention. Fig. 5 is an enlarged cross-sectional diagram that shows a magnetic ring unit regarding a third encoder structure which does not form part of the present invention. Fig. 6 is a lateral diagram that shows a main part regarding a fourth encoder structure which does not form part of the present invention. Fig. 7 is an enlarged cross-sectional diagram that shows a magnetic ring unit regarding an embodiment of encoder structure according to the present invention.

As shown in Fig. 1, a basic configuration of the encoder structure, which does not form part of the present invention, includes a rotative magnetic ring unit 4 that is positioned close to a sensor head unit 6 installed in an irrotational part and has N and S poles arranged alternately on the circumference. Such an encoder structure is characterized by forming a groove unit 7 in at least one of spaces between the N and S poles located on the surface of the magnetic ring unit 4.

### First Encoder

A description will be now given of the first encoder. As shown in Fig. 2, an encoder 3 is adopted to a sealing device for a bearing of a shaft. However, the adoption of the encoder 3 is not limited to the shaft, and may be applied to other parts where hermetic sealing is necessary and a rotational part and an irrotational part are close to each other. As shown in Fig. 2A, a wheel hub 10 is supported in an axial direction against a wheel housing 11, that is, the irrotational part is fixed to a vehicle body, by the bearing comprising an outer ring 1 and an inner ring 2 together holding balls therebetween. One end of a drive shaft 9 is combined with an inner side of the wheel hub 10 by a spline connection. A reference number "12" indicates a hub nut fixed to the wheel hub 10 and locks a wheel disk.

The encoder 3 is positioned between one end of the outer ring 1 and the corresponding end of the inner ring 2 that are rotating relatively to each other, as shown in Fig. 2B or the enlarged diagram showing the part B of Fig. 2A. The encoder 3 comprises L-shaped retainers, each being fixed to the outer ring 1 and the inner ring 2 and positioned to face each other, in addition to a sealing unit 5 and the magnetic ring unit 4 fixed to each L-shaped retainer. In the present encoder, the sealing unit 5 is positioned on the irrotational side, whereas the magnetic ring unit 4 is positioned on the rotational side. The sensor head unit 6 such as an ABS sensor mounted on the irrotational side of the wheel housing 11 is located close to the surface of the magnetic ring unit 4.

Fig. 3 shows an encoder structure installed in a bearing device. The encoder 3 exposing the magnetic ring unit 4 is mounted at an end of spaces between the outer ring 1 and the inner ring 2 of the bearing device. Fig. 1A is the enlarged lateral diagram showing the main part of Fig. 3, where the magnetic ring unit 4 comprises a plurality of the N and S poles arranged alternately. In the present encoder, the arrangement of the N and S poles corresponds to radial lines from the center of the magnetic ring unit 4. In other words, a borderline between a N pole and a S pole is identical to a radial line from the center. The groove unit 7 is formed on each of the borderlines between the N and S poles as shown in Fig. 1B. The groove unit 7 is formed as a concave shaped groove whose cross-section is square-shaped in the present encoder. This groove unit 7 is preferably formed on each border as shown in Fig. 1C . However, formation of the groove unit 7 on all borders is unnecessary if accumulation of the iron particles or the like in the groove units 7 formed on some borders reduces a relative amount of deposits such as the iron particles on the other borders without groove unit 7, that is, if an interference by the deposits is inhibited in practical usage.

According to the composition of the present encoder, even if the iron particles or the like adhere along a magnetic flux inside the groove unit 7 that is formed on the borderline between the N and S pole located on the surface of the magnetic ring unit 4, the iron particles or the like are easily drained away with flowing down muddy water by a gutter-like effect of the groove unit 7. Such effect is enhanced with a centrifugal force of a rotating wheel. Additionally, the deposits accumulated inside the groove unit 7 can be effectively eliminated with the muddy water while the wheel is rotating according to a waterwheel-like effect caused by an edge of a sidewall of the groove unit 7. Further, the groove unit 7 can maintain a clearance between the surface of the magnetic ring unit 4 and the sensor head unit 6 for an extended period of time because of the large capacity for the deposits, even if the iron particles or the like are accumulated inside the groove unit 7 after a long term operation. Accordingly, prevention of damage to the sensor head unit 6 is achieved, and thus, maintenance of detection precision of the sensor head unit 6 as a detecting device is ensured.

### Second Encoder

Fig. 4 is an enlarged cross-sectional diagram showing the magnetic ring unit 4 regarding a second encoder structure, which does not form part of the present invention. In the encoder of Fig. 4, the groove unit 7 is formed so that the cross section of the groove unit 7 is shaped like a horseshoe. Since the groove unit 7 has a circular configuration especially at its bottom corner by forming the cross-sectional shape of the groove unit 7 to a horseshoe shape, the deposits are hardly accumulated at the bottom corner. Additionally, the capacity of the groove unit 7 for the deposits can be determined by selecting the cross-sectional shape of the groove unit 7 from a V shape, a trapezoid, a half -arc shape or the like. Meanwhile, the durability of each magnetic ring unit 4 is ensured according to the shape-related characteristics based on the relation between the strength and durability of the magnetic ring unit 4 regarding formation of the groove unit 7.

### Third Encoder

Fig. 5 is an enlarged cross-sectional diagram showing the magnetic ring unit 4 regarding a third encoder structure, which does not form part of the present invention. In the encoder of Fig. 5, a circumferentially extending groove 8 is formed adjacently to the bottom of the groove unit 7 to have a key-shaped groove unit 13. Normally, the groove unit 7 is supposed to be formed so that the surface area of the magnetic ring unit 4 becomes an area "b". However, formation of the groove 8 secures the relatively large surface area "a" of the magnetic ring unit 4 and the large capacity for the deposits at the same time (a>b). According to the encoder of Fig. 5, the magnetic ring unit 4 can secure the relatively large surface area to acquire a high magnetic characteristic in spite of having the groove unit 7 and the groove 8. In addition, the gutter-like effect caused by the centrifugal force of a rotating wheel and a water-spitting-out effect caused by the waterwheel-like effect together enable easy elimination of the deposits inside the groove unit 7 and the groove 8 with the muddy water to reduce damage to the other parts.

### Fourth Encoder

Fig. 6 is an enlarged lateral diagram showing the main part of the magnetic ring unit 4 regarding a fourth encoder structure, which does not form part of the present invention. In the encoder of Fig. 6, the magnetic ring unit 4 is so structured that the arrangement of the N and S poles on the circumference is tilted at a predetermined angle with respect to radial lines from the center of the magnetic ring unit 4. Therefore, the borderlines between the N and S poles are tilted at the predetermined angle with respect to the radial lines, causing to form the groove unit 7 tilted at the predetermined angle with respect to the radial line. Accordingly, detection impulse by the sensor head unit 6 is reduced by making alteration of the magnetic poles smooth during the detection. Additionally, the capacity for the deposits is increased by enlarging the length of the groove unit 7. Further, a draining ability of the groove unit 7 during mud water immersion is enhanced since a smooth flow of the mud water is achieved inside the groove unit 7 tilted toward a rotative direction of the magnetic ring unit 4.

### Embodiment of the present invention

Fig. 7 is the enlarged cross-sectional diagram showing the magnetic ring unit 4 regarding an embodiment of the encoder structure according to the present invention. The present embodiment is characterized by forming the groove unit 7 so that a direction to divide the N pole and the S pole in the cross-sectional direction of the groove unit 7 is tilted at a predetermined angle with respect to a direction perpendicular to the surface of the magnetic ring unit 4. The groove unit 7 of the encoder is tilted toward a slotting direction, that is, a direction in which the deposits are eliminated by the rotation of the magnetic ring unit 4, by forming the groove unit 7 with some angle. Consequently, the ability of the groove unit 7 to drain the mud water is further improved, preventing the accumulation of the iron particles or the like inside the groove unit 7. The borderline between the N and S poles where the groove unit 7 is formed with the cross-section being tilted according to the present embodiment may correspond to the radial line from the center of the magnetic ring unit 4 as shown in Fig. 3. Alternatively, this borderline may be tilted at a predetermined angle with respect to the radial line as shown in Fig. 6.

The description has been given of each encoder and of the embodiment according to the present invention, in which a shape and a type of the following items may be arbitrarily selected without departing from the principle of operation. Such items are, for instance, usage of the encoder (an ABS sensor, a traction control system sensor, a speedometer, etc), the shape and the type (a reed switch, etc) of the sensor head unit 6, the shape and the type of the magnetic ring unit 4 of the encoder. Others are the shape (a V shape, a concave shape, a trapezoid, a horseshoe shape, an arc shape, a tilt angle, etc), the type and a forming position of the groove unit 7 located between the N and S poles, the tilt angle of the arrangement of the N and S poles and the shape and the type (the shape of a contact lip part, a material, the shape of the L-shaped retainer, etc) of the sealing unit 5 of the encoder. Here, regarding the forming position of the groove unit 7, the groove unit 7 may be formed to have an equal groove width on the N pole side and the S pole side of the borderline. Alternatively, the groove unit 7 may be so formed that one side of the borderline has a larger groove width than the other side. In addition, the circumferentially extending groove 8 of the key-shaped groove unit 13 may be formed on one side of the borderline. Alternatively, the circumferentially extending groove 8 may be formed on both sides of the borderline so that an actual shape of the key-shaped groove unit 13 becomes convex.

According to the present invention, the encoder structure is characterized by including the sensor head unit 6 installed in the irrotational part, the rotative magnetic ring unit 4 that is positioned close to the sensor head unit 6 and has the N and S poles arranged alternately on a circumference thereof, and the groove unit 7 formed in at least one of spaces between the N and S poles located on the surface of the magnetic ring unit 4. Thus, deposits such as the iron particles are easily drained away with the muddy water because a part along a magnetic flux where the iron particles tend to be accumulated functions as a groove-like path. Additionally, accumulated iron particles remain inside the groove unit 7 that is concave shaped. Accordingly, the deposits hardly remain on the surface of the magnetic ring unit 4, preventing damage to the sensor head unit 6.

In addition, the groove unit 7 is formed so that the direction to divide the N and S poles in the cross-sectional direction of the groove unit 7 is tilted at the predetermined angle with respect to the direction perpendicular to the surface of the magnetic ring unit 4. Therefore, an ability of the groove unit 7 to drain the mud water is further improved according to the cross-section of the groove unit 7 being tilted toward a slotting direction.

In a case that the cross-sectional shape of the groove unit 7 is selected from one of the V shape, the concave shape, the trapezoid and the horseshoe shape, the capacity of the groove unit 7 for the deposits is adjusted by selecting an appropriate shape of the groove unit 7 corresponding to characteristics of the magnetic ring unit 6. Accordingly, durability of the magnetic ring unit 6 is ensured according to the shape-related characteristics. Further, in a case that the circumferentially extending groove 6 is formed adjacently to the bottom of the groove unit 7 to have the key-shaped groove unit 13, a relatively large surface area of the encoder is secured to acquire the high magnetic characteristic in spite of having the groove unit 7. Additionally, the centrifugal force of the rotating wheel easily removes the deposits inside the groove unit 7, for preventing damage to other parts.

Furthermore, in a case that an arrangement of the N and S poles on the circumference is tilted at a predetermined angle with respect to a radial line from the center of the magnetic ring unit 4, detection impulse by the sensor head unit 6 can reduced by making alteration of the magnetic poles smooth. Additionally, the capacity for the deposits is increased by enlarging the length of the groove unit 7. Further, a draining ability of the groove unit 7 during the mud water immersion is enhanced since the smooth flow of the mud water is achieved inside the groove unit 7 tilted toward a rotative direction of the encoder.

While the present invention has been disclosed in terms of the preferred embodiment in order to facilitate better understandings of the present invention, it should be appreciated that the invention can be embodied in various ways without departing from the scope of the invention. Therefore, the invention should be understood to include all possible embodiments which can be embodied without departing from the scope of the invention as defined by the claims.

## Claims

1. An encoder structure (3) comprising:
a sensor head unit (6) installed in an irrotational part;
a rotative magnetic ring unit (4) positioned close to the sensor head unit (6) and having a north pole and a south pole arranged alternately on a circumference thereof; and
a groove unit (7) formed in at least one space between a north pole and an adjacent south pole located on a surface of the magnetic ring unit,
**characterized in that** the groove unit is formed so that the direction of the groove unit dividing the north pole and the south pole in a cross-sectional direction of the groove unit is tilted at a predetermined angle with respect to the direction perpendicular to the surface of the magnetic ring unit.

2. The encoder structure according to claim 1 **characterized in that**,
a cross-sectional shape of the groove unit (7) is selected from one of a V shape, a concave shape, a trapezoid and a horseshoe shape.

3. The encoder structure according to claim 1 or 2 **characterized in that**,
a circumferentially extending groove (8) is formed adjacently to a bottom of the groove unit to have a key-shaped groove unit.

4. The encoder structure according to any one of claims 1 to 3 **characterized in that**,
an arrangement of the north pole and the south pole on the circumference is tilted at a predetermined angle with respect to a radial line from a center of the magnetic ring unit.

## Patentansprüche

1. Geberstruktur (3), die Folgendes umfasst:
eine Sensorkopfeinheit (6), die in einem drehungsfreien Teil installiert ist;
eine drehende Magnetringeinheit (4), die nah bei der Sensorkopfeinheit (6) positioniert ist und einen Nordpol und einen Südpol aufweist, die abwechselnd an einem Umfang davon angeordnet sind; und
eine in mindestens einem Zwischenraum zwischen einem Nordpol und einem benachbarten Südpol gebildete Rilleneinheit (7), die sich an einer Oberfläche der Magnetringeinheit befindet,
**dadurch gekennzeichnet, dass** die Rilleneinheit derart gebildet ist, dass die Richtung der den Nordpol und den Südpol in einer Querschnittsrichtung der Rilleneinheit trennenden Rilleneinheit um einen vorherbestimmten Winkel in Bezug auf die zur Oberfläche der Magnetringeinheit senkrechte Richtung geneigt ist.

2. Geberstruktur nach Anspruch 1, **dadurch gekennzeichnet, dass**
eine Querschnittsform der Rilleneinheit (7) aus einer V-Form, einer konkaven Form, einem Trapezoid und einer Hufeisenform ausgewählt ist.

3. Geberstruktur nach Anspruch 1 oder 2, **dadurch gekennzeichnet, dass**
eine sich in Umfangsrichtung erstreckende Rille (8) einem Boden der Rilleneinheit benachbart gebildet ist, um eine schlüsselförmige Rilleneinheit zu erhalten.

4. Geberstruktur nach einem der Ansprüche 1 bis 3, **dadurch gekennzeichnet, dass**
eine Anordnung des Nordpols und des Südpols an dem Umfang um einen vorherbestimmten Winkel in Bezug auf eine Radiallinie von einer Mitte der Magnetringeinheit geneigt ist.

## Revendications

1. Structure de codeur (3) comprenant :
une unité de tête de capteur (6) installée dans une pièce non rotationnelle ;
une unité de bague magnétique rotative (4) positionnée près de l'unité de tête de capteur (6) et ayant un pôle nord et un pôle sud agencés alternativement sur une circonférence de celle-ci ; et
une unité de rainure (7) formée dans au moins un espace entre un pôle nord et un pôle sud adjacent située sur une surface de l'unité de bague magnétique,
**caractérisée en ce que** l'unité de rainure est formée de telle sorte que le sens de l'unité de rainure divisant le pôle nord et le pôle sud dans un sens en coupe transversale de l'unité de rainure soit incliné à un angle prédéterminé relativement au sens perpendiculaire à la surface de l'unité de bague magnétique.

2. Structure de codeur selon la revendication 1 **caractérisée en ce que**
une forme en coupe transversale de l'unité de rainure (7) est sélectionnée parmi une forme en V, une forme concave, une forme trapézoïdale et une forme de fer à cheval.

3. Structure de codeur selon la revendication 1 ou 2 **caractérisée en ce que**
une rainure s'étendant circonférentiellement (8) est formée adjacente à un fond de l'unité de rainure pour avoir une unité de rainure en forme de clavette.

4. Structure de codeur selon l'une quelconque des revendications 1 à 3, **caractérisée en ce que**
un agencement du pôle nord et du pole sud sur la circonférence est incliné à un angle prédéterminé par rapport à une ligne radiale depuis un centre de l'unité de bague magnétique.
